# EUROPÄISCHE PATENTSCHRIFT

(11) **EP 2 020 721 B1**
(45) Veröffentlichungstag und Bekanntmachung des Hinweises auf die Patenterteilung: **22.05.2013**
(21) Anmeldenummer: 08104822.5
(22) Anmeldetag: 22.07.2008
(51) Int. Cl.: H02H 7/08, D06F 37/30, H02P 29/02

(54) **Schaltungsanordnung zur Überwachung einer Tachoeinrichtung für einen Antriebsmotor einer Trommel einer Waschmaschine**
Switching assembly for monitoring a tachometer for a drive motor of a drum of a washing machine
Dispositif de commutation destiné à la surveillance d'un tachymètre pour un moteur d'entraînement d'un tambour d'un lave-linge

(30) Priorität: 03.08.2007 DE 102007036668
(43) Veröffentlichungstag der Anmeldung: 04.02.2009
(73) Patentinhaber: BSH Bosch und Siemens Hausgeräte GmbH, 81739 München (DE)
(72) Erfinder: Feldmeier, Rudolf, 94447, Plattling (DE)

(56) Entgegenhaltungen:
- DE-A1- 2 515 792
- GB-A- 1 450 679

## Beschreibung

Die Erfindung betrifft eine Schaltungsanordnung zur Überwachung einer Tachoeinrichtung, mit welcher eine Drehzahl eines Motors erfassbar ist, welche eine Steuerelektronik aufweist, mittels welcher die Drehzahl des Motors durch ein mit dem Motor elektrisch verbundenes erstes elektronisches Schaltelement regelbar ist.

Aus der DE 197 33 533 A1 ist eine Überwachungsschaltung für die Steuerung eines elektrischen Motors, insbesondere eines Wäschetrommelmotors, bekannt. Mittels der Überwachungsschaltung sollen schaltungstechnische Fehlerzustände, wie der Kurzschluss eines als Triac ausgebildeten ersten elektronischen Schaltelements und/oder ein Tachobruch erkannt werden. Parallel zur Reihenschaftung des Motors und eines Schalters ist ein Parallelwiderstand geschaltet, der in Reihe zu dem Triac für den Motor gelegt ist. Die sich im Normalfall, und im Fehlerfall ergebenden Spannungszustände werden von einer Steuerelektronik, insbesondere einem Mikroprozessor, erfasst, der die Motordrehzahl regelt.

Die GB 1 450 679 beschreibt eine Waschmaschine oder Wäscheschleuder mit einem elektronisch geregelten Antriebsmotor. Der Rückkopplungszweig des Regelkreises beinhaltet einen Tachogenerator, wobei die Solldrehzahl über eine einstellbare Offsetspannung vorgegeben ist, die in die Windung des Tachogenerators eingespeist wird.

Es ist Aufgabe der vorliegenden Erfindung, eine Schaltungsanordnung zu schaffen, bei der eine Fehlfunktion, insbesondere ein Tachobruch frühzeitig erkannt werden kann.

Diese Aufgabe wird durch eine Schaltungsanordnung, welche die Merkmale nach Anspruch 1 aufweist, gelöst.

Eine erfindungsgemäße Schaltungsanordnung zur Überwachung einer Tachoeinrichtung, mit welcher die Drehzahl eines Motors erfassbar ist, umfasst eine Steuerelektronik, mittels welcher die Drehzahl des Motors durch ein mit dem Motor elektrisch verbundenes erstes elektronisches Schaltelement regelbar ist. Die Steuerelektronik ist mit einer Tacho-Auswerteschaltung verbunden, welche ein zweites elektronisches Schaltelement aufweist, welches eine Steuerelektrode umfasst. Die Steuerelektrode des zweiten elektronischen Schaltelements ist vorgespannt und somit mit einer Offsetspannung beaufschlagt. Dies ermöglicht das frühzeitige Erkennen einer Fehlfunktion der Tachoeinrichtung, Insbesondere kann dadurch ermöglicht werden, dass die Erkennung eines Tachofehlers, insbesondere eines Tachobruchs, schon vor dem Test eines Wenderelais, vor dem Test des ersten elektronischen Schaltelements und vor dem Ansteuern des Motors erfolgen kann. Auch bei einer Unterspannung oder einer "weichen" Netzspannungsversorgung wird das Ausbleiben von Tachoimpulsen nicht mehr als falscher Tachofehler erkannt.

Vorzugsweise ist die Vorspannung der Steuerelektrode des zweiten elektronischen Schaltelements so eingestellt, dass mit einem Vergleich ohne ein Vorspannen der Steuerelektrode geringere elektrische Spannung ausreicht, um das zweite Schaltelement in den leitenden Zustand zu versetzen. Im Betrieb ist es somit lediglich erforderlich, ein kleineres Spannungsintervall zu überwinden, um den leitenden Zustand des zweiten Schaltelements einzustellen, was auch in einer verkürzten Zeit erfolgen kann, wodurch die frühzeitige Erkennung einer Fehlfunktion der Tachoeinrichtung möglich ist.

Vorzugsweise ist die Steuerelektrode des zweiten Schaltelements mit einem zweiten Schaltungsknoten elektrisch verbunden, mit welchem eine Induktivität der Tachoeinrichtung und eine Stromquelle, mit welcher die Vorspannung der Steuerelektrode erzeugbar ist, elektrisch verbunden sind. Durch diese spezifische Verschaltung und der expliziten Anordnung der Stromquelle kann die Vorspannung der Steuerelektrode besonders einfach eingestellt werden.

Vorzugsweise umfasst die Stromquelle einen Widerstand und eine dazu in Reihe geschaltete Diode. Die Diode kann auch als Zenerdiode ausgebildet sein. Hauptsächlich erfüllt die Diode eine Schutzfunktion und kann bei entsprechender Dimensionierung des Widerstandes entbehrlich sein. Zum Schutz gegen Störungen auf der Versorgungsspannungsleitung ist sie aber in jedem Falle vorteilhaft.

Vorzugweise beträgt die Vorspannung der Steuerelektrode des zweiten elektronischen Schaltelements zwischen 0,1 V und 0,4 V. Insbesondere beträgt die Vorspannung einen Wert von etwa 0,2 V. Durch diese Dimensionierung der Vorspannung kann einerseits noch ein zuverlässiges Sperren des zweiten Schaltelements gewährleistet werden und andererseits dennoch ein frühzeitigeres Erreichen des leitenden Zustandes im Bedarfsfalle gewährleistet werden.

Vorzugsweise umfasst die Steuerelektronik einen Mikroprozessor, welcher mit dem zweiten elektronischen Schaltelement verbunden ist und abhängig von dem Betriebszustand des zweiten Schaltelements ein zugeordneter Zustand eines Digitalsignals an den Mikroprozessor angelegt ist, wobei abhängig von dem Zustand des Digitalsignals eine Fehlfunktion der Tachoeinrichtung erkennbar ist. Vorzugsweise ist der Mikroprozessor mit einer Arbeitselektrode des zweiten elektronischen Schaltelements elektrisch verbunden.

Die Tachoeinrichtung umfasst bevorzugterweise eine Induktionsspule und ein magnetisches Polrad.

Die Tachoeinrichtung ist bevorzugterweise so ausgebildet, dass sie im Betrieb des Motors ein Wechselspannungssignal erzeugt.

Vorzugsweise ist der leitende Zustand des zweiten elektronischen Schaltelements durch die positive Halbwelle dieses Wechselspannungssignals erzeugbar und für die Zeitdauer der positiven Halbwelle ist ein erster Zustand, insbesondere der "Low"- Zustand des Digitalsignals am Eingang des Mikroprozessors angelegt.

Das zweite elektronische Schaltelement ist während der Zeitdauer der negativen Halbwelle des Wechselspannungssignals vorzugsweise gesperrt.

Die negative Halbwelle des durch die Tachoeinrichtung erzeugten Wechselspannungssignals im Betrieb des Motors ist insbesondere auf eine elektrische Spannung auf einen Wert von minus 0,7 V begrenzt.

Vorzugsweise ist für die Zeitdauer der negativen Halbwelle ein zweiter Zustand, insbesondere der "High" - Zustand des Digitalsignals am Eingang des Mikroprozessors angelegt.

Die Diode der Stromquelle ist vorzugsweise während der Zeitdauer der positiven Halbwelle des Wechselspannungssignals gesperrt, wenn an ihr eine Spannung größer 4,2 V, insbesondere größer 4,4 V anliegt.

Die Diode der Stromquelle ist vorzugsweise während der Zeitdauer der negativen Halbwelle des Wechselspannungssignals leitend.

Das zweite elektronische Schaltelement ist insbesondere als Transistor ausgebildet. Dieser umfasst neben einer Steuerelektrode und einer Arbeitselektrode auch eine Bezugselektrode. Diese sind bei einer Ausführung als Bipolartransistor als Basis, Emitter und Kollektor ausgebildet.

Prinzipiell kann für das zweite elektronische Schaltelement auch ein beliebiger anderer Transistortyp vorgesehen sein.

Besonders bevorzugt erweist es sich, wenn der Motor zum Antrieb einer Trommel für ein Hausgerät zur Pflege von Wäschestücken, insbesondere einer Waschmaschine, eines Waschtrockners oder eines Wäschetrockners, ausgebildet ist.

Ein weiterer Aspekt der Erfindung betrifft ein Hausgerät zur Pflege von Wäschestücken, insbesondere eine Waschmaschine, einen Wäschetrockner oder einen Waschtrockner, mit einer Trommel zur Aufnahme von Wäschestücken und einem Motor zum Antrieb der Trommel. Das Hausgerät umfasst des Weiteren eine erfindungsgemäße Schaltungsanordnung oder eine vorteilhafte Ausgestaltung davon, welche zur Funktionsüberwachung einer Tachoeinrichtung eines Motors ausgebildet ist.

Ein Ausführungsbeispiel der Erfindung wird nachfolgend anhand schematischer Zeichnungen näher erläutert. Es zeigen:
- Fig.1 1: ein schematisches Blockbild einer erfindungsgemäßen Schaltungsanordnung;
- Fig. 2: ein Schaltbild der Schaltungsanordnung gemäß Fig. 1;
- Fig. 3: erste Signalverläufe an der Tachoeinrichtung und der Steuerelektronik; und
- Fig. 4: zweite Signalverläufe an der Tachoeinrichtung und der Steuerelektronik.

In den Figuren werden gleiche oder funktionsgleiche Elemente mit den gleichen Bezugszeichen versehen.

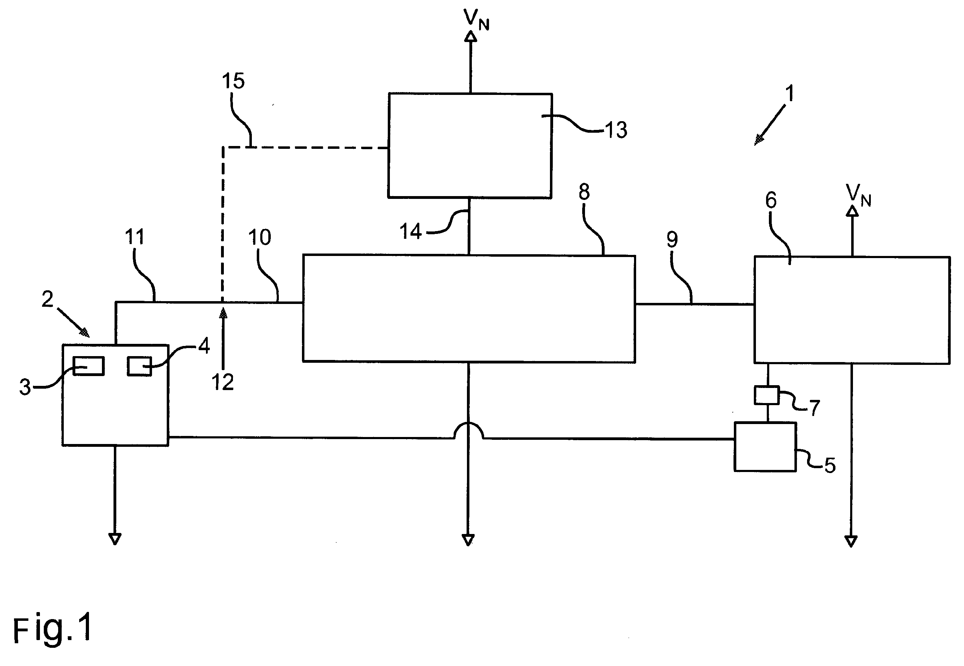

In Fig. 1 ist in einer schematischen Blockbilddarstellung eine Schaltungsanordnung 1 gezeigt, welche zur Überwachung einer Tachoeinrichtung 2 ausgebildet ist. Die Schaltungsanordnung 1 ist im Ausführungsbeispiel in einem Hausgerät zur Pflege von Wäschestücken angeordnet, wobei die Tachoeinrichtung 2 eine Induktionsspule 3 und ein magnetisches Polrad 4 umfasst.

In dem Hausgerät befindet sich auch ein Motor 5, welcher als Universalmotor ausgebildet ist und zum Antrieb einer nicht dargestellten Trommel des Hausgerätes vorgesehen ist. Die Ansteuerung des Motors 5 erfolgt durch einen der Steuerelektronik der Schaltungsanordnung 1 zugeordneten Mikroprozessor 6, wobei dies über eine Phasenanschnittsteuerung über eine Triac 7 erfolgt, welcher als erstes elektronisches Schaltelement ausgebildet ist.

Für die Regelung der Geschwindigkeit des Motors 5 muss die Drehzahl des Motors 5 bekannt sein. Diese Drehzahl wird über die Tachoeinrichtung 2 erfasst, in einer Tacho-Auswerteschaltung 8 aufbereitet und an den Mikroprozessor 6 insbesondere an dessen Timereingang, angelegt. Die Tacho-Auswerteschaltung 8 ist über eine Signalverbindung 9 mit dem Mikroprozessor 6 verbunden. Des Weiteren ist die Tacho-Auswerteschaltung 8 über eine Signalverbindung 10 mit einem Schaltungsknoten 12 verbunden, wobei auch die Tachoeinrichtung 2 über eine Signalverbindung 11 mit diesem Schaltungsknoten 12 verbunden ist. Sowohl die Tachoeinrichtung 2, als auch die Tacho-Auswerteschaltung 8 und auch der Mikroprozessor 6 sind darüber hinaus mit Massepotential verbunden. Entsprechendes gilt für den Motor 5.

Die Schaltungsanordnung 1 umfasst des Weiteren eine Stromquelle 13, welche ebenso wie der Mirkoprozessor 6 mit Versorgungsspannungspotential V_{N} verwunden ist. Des Weiteren kann vorgesehen sein, dass die Stromquelle 13 über eine Signalverbindung 14 direkt mit der Tacho-Auswerteschaltung 8 verbunden ist. Alternativ kann vorgesehen sein, dass die Stromquelle 13 über eine Signalverbindung 15 mit dem Schaltungsknoten 12 verbunden ist.

Die Tachoeinrichtung 2 liefert im Betrieb des Motors 5 ein Wechselspannungssignal, dessen Amplitude und Frequenz abhängig von der Motordrehzahl sind.

Ist die Schaltungsanordnung 1 ohne die Stromquelle 13 ausgebildet, so wandelt die Tacho-Auswerteschaltung 8 die Wechselspannung in ein für den Mikroprozessor 6 verwertbares Digitalsignal um. Ist nun die Spule 3 der Tachoeinrichtung 2 beschädigt und liegt insbesondere ein Tachobruch vor, so kann eine Regelung der Motordrehzahl aufgrund von ausbleibenden Tachoimpulsen nicht mehr erfolgen. Eine Tachobrucherkennung findet dann in der Weise statt, dass während des gesteuerten Sanftanlaufs des Motors 5 eine Überprüfung auf Tachoimpulse durchgeführt wird. Werden während des gesteuerten Sanftanlaufs des Motors 5 keine Tachoimpulse erkannt, so liegt ein Verdacht auf einen Tachofehler vor. Daraufhin wird durch Abschalten der Wenderelais ein Abschalten des Motorkreislaufes durchgeführt. Nach einer gewissen Zeitdauer, welche die Erholzeit der Tachoeinrichtung darstellt, werden die Wenderelais wieder eingeschaltet und es wird ein erneuter Versuch unternommen, den Motor 5 anzusteuern. Wenn dann ununterbrochen in Reihenfolge ein Tachofehler erkannt wird, dann wird der sichere Zustand eingenommen.

Bei einer Unterspannung oder einer "weichen" Netzspannungsversorgung, welche dadurch charakterisiert ist, dass die Spannung bei einer Belastung einbricht, kann ein benötigtes Drehmoment zum Antreiben der Trommel nicht erreicht werden, da eine voll beladene Trommel mit nassen Wäschestücken nur schwer anläuft. Das kann dann dazu führen, dass ein mögliches Ausbleiben der Tachoimpulse aufgrund des erschwerten Anlaufens als vermeidlicher Tachofehler erkannt wird.

Um dies zu vermeiden und eine Besserung der Funktionsüberwachung der Tachoeinrichtung 2 gewährleisten zu können, ist die Stromquelle 13 vorgesehen. Durch diese kann insbesondere in Verbindung mit weiteren Komponenten der Schaltungsanordnung 1 eine Vorspannung eines zweiten elektronischen Schaltelements der Tacho-Auswerteschaltung 8 erreicht werden.

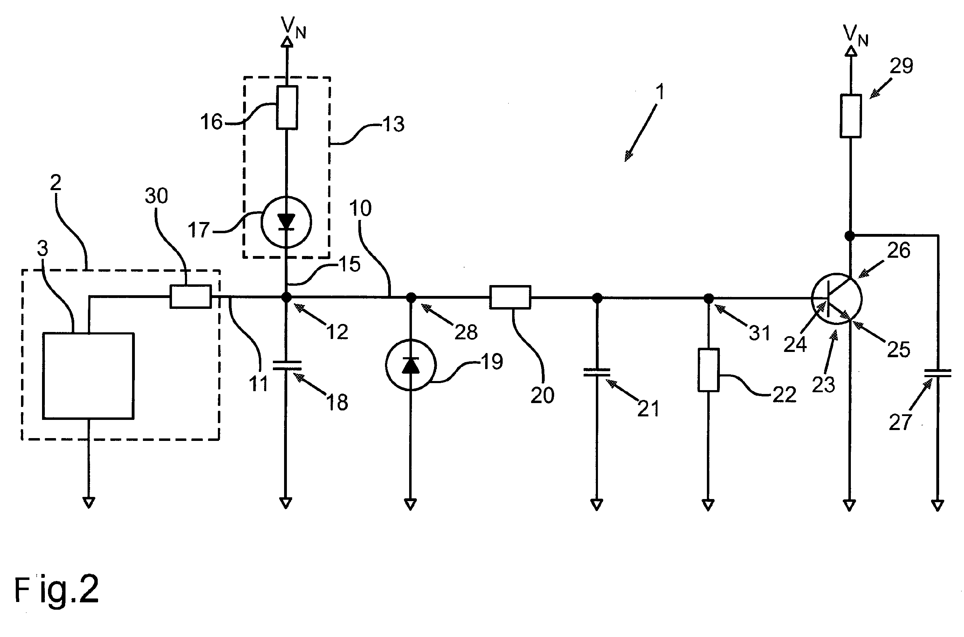

In Fig. 2 ist ein Schaltplan dargestellt, welcher die Schaltungsanordnung 1 in Fig. 1 detaillierter zeigt.

Die Tachoeinrichtung 2 umfasst neben der Spule 3 einen dazu in Reihe geschalteten Widerstand 30.

Die Stromquelle 13 umfasst einen Ohmschen Widerstand 16, welcher in Reihe mit einer Diode 17 geschaltet ist. Die Diode 17 kann auch als Zenerdiode ausgebildet sein.

Die Tacho-Auswerteschaltung 8 umfasst einen ersten Kondensator 18, welcher unmittelbar mit dem Schaltungsknoten 12 einerseits und Massenpotential andererseits verbunden ist. Des Weiteren ist der Tacho-Auswerteschaltung 8 eine Diode 19 zugeordnet, welche mit einem Schaltungsknoten 28 einerseits und Massenpotential andererseits verbunden ist. Diese Diode 19 kann auch als Zenerdiode ausgebildet sein.

Darüber hinaus umfasst die Tacho-Auswerteschaltung 8 einen weiteren Kondensator 21 sowie einen mit einem Schaltungsknoten 31 verbundenen Ohmschen Widerstand 22.

Darüber hinaus umfasst die Tacho-Auswerteschaltung 8 ein zweites elektronisches Schaltelement, welches im Ausführungsbeispiel als Transistor 23 ausgebildet ist. Die Steuerelektrode 24 des Transistors 23 ist mit einem Schaltungszweig verbunden, welcher mit dem Schaltungsknoten 12 kontaktiert ist. In diesem sich zwischen dem Schaltungsknoten 12 und der Steuerelektrode 24 erstreckenden Schaltungszweig ist ein Ohmscher Widerstand 20 angeordnet. Der Transistor 23 umfasst des Weiteren eine Bezugselektrode 25 sowie eine Arbeitselektrode 26. Die in Fig. 2 gezeigte Ausführung des Transistors 23 ist lediglich beispielhaft und es kann jeglicher Typ eines Transistors für das zweite elektronische Schaltelement vorgesehen sein.

Die Arbeitselektrode 26 ist mit Versorgungsspannungspotential V_{N} über einen weiteren Widerstand 29 verbunden. Darüber hinaus ist der in Fig. 2 nicht dargestellte Mirkoprozessor 6 mit der Arbeitselektrode 26 elektrisch verbunden. Die Bereitstellung der Spannung an dem Mirkoprozessor 6 kann über den Kondensator 27 gewährleistet werden. Die Leitung zwischen der Arbeitselektrode 26 und dem Mikroprozessor 6 kann zusätzlich zu dem Kondensator 27 einen (nicht dargestellten) zusätzlichen Widerstand enthalten, wobei dieser zusätzliche Widerstand ganz oder teilweise in einer Eingangsimpedanz des Mikroprozessors bestehen kann. Dieser zusätzliche Widerstand und der Kondensator 27 bilden ein RC-Filter, welches zur Glättung des dem Mikroprozessor zugeführten Signals nützlich sein kann. Alternativ kann es auch möglich sein, die Arbeitselektrode 26 direkt und ohne den Kondensator 27 mit dem Mikroprozessor zu verbinden.

Zur Erfassung der Drehzahl des Motors 5 mit der Tachoeinrichtung 2 ist gemäß der Darstellung Fig. 1 eine entsprechende Kopplung vorgesehen, wie dies schematisch durch die direkte Verbindungslinie zwischen den beiden Komponenten 2 und 5 angedeutet ist.

Nachfolgend wird eine Schaltungsbeschreibung im Hinblick auf die Erkennung der Tachofunktionen näher erläutert. Ist die Tachoeinrichtung 2 voll funktionsfähig und der Motor 5 in Betrieb, das heißt er dreht sich, wird über den Ohmschen Widerstand 16 und die Tachospule 3 die Basis und somit die Steuerelektrode 24 des Transistors 23 niederohmig auf Massepotential geschaltet. Jedoch stellt sich über die Diode 17 der Stromquelle 13 sowie den Widerstand 16 der Stromquelle 13, dem Widerstand 20 sowie dem Widerstand 22 eine Offsetspannung an der Steuerelektrode 24 des Transistors 23 ein. Im Ausführungsbeispiel beträgt diese Vorspannung einen Wert von etwa 0,2 V. Je nach Dimensionierung der Bauelemente kann jedoch auch eine anderweitig dimensionierte Offsetspannung vorgesehen sein.

Der Transistor 23 sperrt in diesem Zustand noch sicher. An den Mikroprozessor 6 wird ein permanentes "High" - Signal von etwa + 5 V ausgegeben. Die Tachoeinrichtung 2 ist funktionsfähig und der Motor 5 kann angesteuert werden.

In einem Zustand, in dem sich der Motor 5 dreht und die Tachoeinrichtung 2 eine Fehlfunktion, insbesondere Tachobruch, aufweist wird die Steuerelektrode 24 des Transistors 23 über den Widerstand 16 und die Diode 17 der Stromquelle 13 sowie den Widerstand 20 und den Widerstand 22 auf eine Spannung von etwas 1,0 V gelegt. Dadurch steuert der Transistor 23 durch und gibt an den Mikroprozessor 6 ein permanentes "Low" - Signal von 0 V aus. Dies charakterisiert einen Tachobruch. Der Motor 5 wird dann nicht mehr angesteuert.

In einem Zustand, in dem sich der Motor 5 dreht und nur die Tachoeinrichtung 2 fehlerfrei funktioniert, wird von der Tachoeinrichtung 2 des Motors 5 bei der Motordrehung ein Wechselspannungssignal erzeugt. Die positive Halbwelle dieses Wechselspannungssignals wird über den Spannungsteiler umfassend die Widerstände 16, 20 und 22 an die Steuerelektrode 24 des Transistors 23 gelegt und der Transistor 23 durchgesteuert. Es entsteht für die Zeitdauer der positiven Halbwelle dieses Wechselspannungssignals ein "Low" - Signal am Eingang des Mikroprozessors 6. Bei hoher Drehzahl des Motors und einem entsprechenden Wechselstromsignal mit hoher Spannung kann die über der Diode 17 anstehende Spannung so weit abfallen, dass die Diode sperrt und dadurch den Widerstand 16 aus dem Spannungsteiler 16, 20 und 22 herausschaltet; das zum Transistor 23 gelangende Signal wird dann nur noch die die Widerstände 20 und 22 bestimmt.
Aufgrund der Vorspannung ist die an der Steuerelektrode 24 anliegende Offsetspannung, welche aufgrund der Beschaltung über die Stromquelle 13 erzeugt wird, mit einem Wert von etwa 0,2 V dimensioniert. Durch diese Vorspannung kann der Transistor 23 schneller bzw. früher bzw. mit geringerer Spannung angesteuert werden, als dies ohne die Stromquelle der Fall wäre.

Die negative Halbwelle des Wechselspannungssignals der Tachoeinrichtung 2 wird über die Widerstände 16 und 30 und die Diode 19 auf minus 0,7 V am Schaltungsknoten 12 begrenzt, sodass der Transistor 23 während der Zeit der negativen Halbwelle gesperrt ist. Am Eingang des Mikroprozessors 6 stellt sich für diese Zeitdauer der negativen Halbwelle ein "High" - Signal ein. Diese oben dargestellt Erläuterung betrifft insbesondere den Schaltungsteil der Tachoauswertung.

Bezüglich des Schaltungsteils für die Tachobrucherkennung ist bei der positiven Halbwelle des von der Tachoeinrichtung 2 erzeugten Wechselspannungssignals bei einer Drehung des Motors 5 die Diode 17 der Stromquelle 13 sperrend, wenn an ihrer Kathode eine Spannung größer etwa 4,4 V anliegt. Bei der negativen Halbwelle des Wechselspannungssignals ist diese Diode 17 leitend. Über die Diode 19 ist das Potential an der Kathode der Diode 17 auf minus 0,7 V begrenzt.

Durch die Vorspannung der Steuerelektrode 24, welche durch die Stromquelle 13 und die entsprechende Verschaltung in der Schaltungsanordnung 1 ermöglicht wird, kann eine sichere Erkennung eines Tachobruchs durch Auswertung eines Digitalsignals erreicht werden. Die Erkennung eines möglichen Tachobruchs kann schon vor dem Test des Wenderelais, dem Test des Triacs 7 und insbesondere vor der Ansteuerung des Motors 5 gewährleistet werden. Der sichere Zustand kann sofort nach Erkennen eines Tachofehlers eingenommen werden. Darüber hinaus kann zwischen einem tatsächlichen Fehler der Tachoeinrichtung 2 bei einem Tachobruch und einem vermeintlichen Tachofehler bei einer Unterspannung und dadurch fehlenden Drehmoment unterschieden werden und dies erkannt werden. Darüber hinaus kann eine verbesserte Empfindlichkeit bei niedrigen Motordrehzahlen gewährleistet werden und es können kleinere Motordrehzahlen als bei der herkömmlichen Vorgehensweise erkannt werden.

Die Spannungsversorgung der Schaltungsanordnung 1 kann auch anders sein.

Wesentlicher Aspekt ist insbesondere die Vorspannung der Steuerelektrode 24 des Transistors 23, was insbesondere durch die Stromquelle 13 mit dem Widerstand 16 und der dazu in Reihe geschalteten Diode 17 in Verbindung mit den Widerständen 20 und 22 erreicht werden kann.

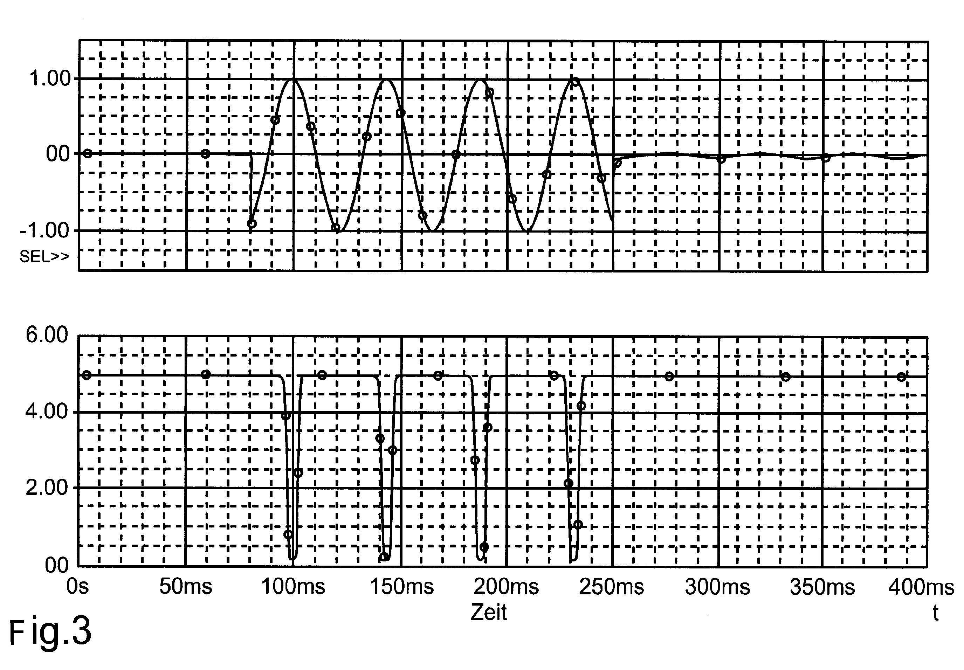

In Fig. 3 sind zwei Signalverläufe gezeigt, wobei im oberen Diagramm ein Signalverlauf an der Spule 3 der Tachoeinrichtung 2 gezeigt ist, wenn die Schaltungsanordnung 1 die Stromquelle 13 nicht umfasst. In dem in Fig. 3 unteren Diagramm ist ein Signalverlauf am Eingang des Mikroprozessors 6 gezeigt, wenn die Schaltungsanordnung 1 die Stromquelle 13 nicht umfasst.

In Fig. 3 ist zu erkennen, dass in der Zeitphase t von 0 s bis 80 ms kein Tachosignal vorhanden ist. Die Tachoeinrichtung ist funktionsfähig. Am Mikroprozessor 6 liegt gemäß dem Signalverlauf in dem unteren Diagramm ein "High" - Signal an.

In der Zeitphase zwischen 80 ms und 250 ms ist gemäß dem Signalverlauf im oberen Diagramm ein Tachosignal vorhanden. Am Mikroprozessor 6 liegt ein Digitalsignal an, welches eine relativ kurze Pausendauer aufweist.

In der Zeitphase zwischen 250 ms und 400 ms liegt ein Tachobruch vor. Gemäß dem Signalverlauf im unteren Diagramm ist jedoch keine Änderung des am Mikroprozessors 6 anliegenden Signals im Vergleich zu dem Zustand gegeben, in dem kein Tachosignal vorhanden ist, wie es in der Zeitphase zwischen 0 und 80 ms der Fall ist.

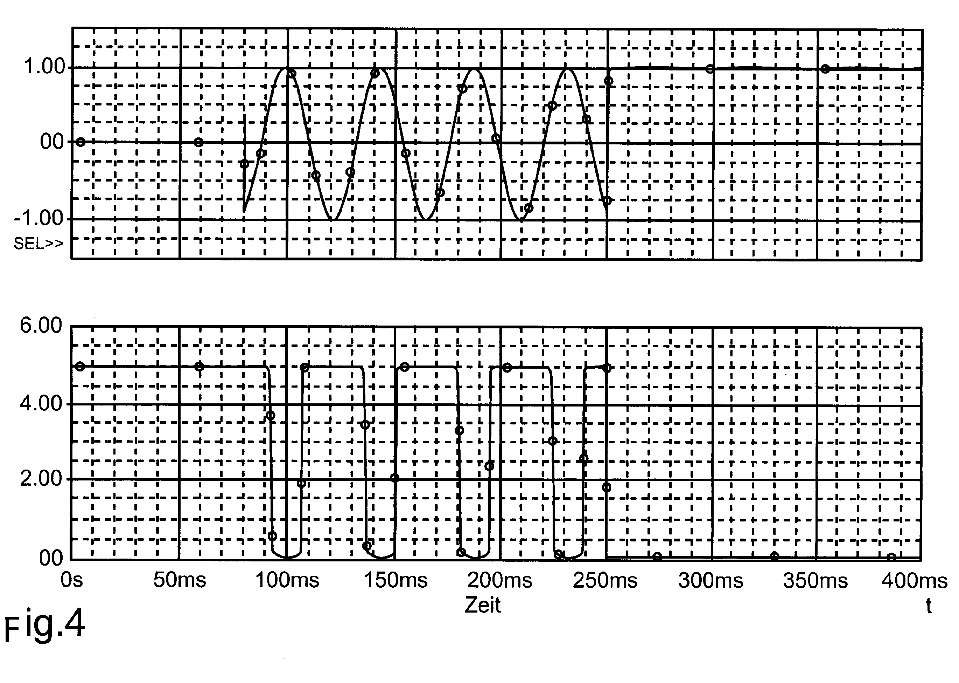

In Fig. 4 ist in dem oberen Diagramm ein Signalverlauf der Tachospule 3 gezeigt, der bei der Schaltungsanordnung 1 gemäß Fig. 2 und somit bei der Schaltungsanordnung 1 mit der Stromquelle 13 und der entsprechenden Verschaltung, auftritt.

Im unteren Diagramm gemäß Fig. 4 ist ein Signalverlauf am Eingang des Mikroprozessors 6 gezeigt, wie er bei einer Schaltungsanordnung 1 mit der Stromquelle 13 gemäß der Ausgestaltung in Fig. 2 auftritt.

In der Zeitphase t zwischen 0 und 80 ms ist gemäß dem oberen Diagramm in Fig. 4 kein Tachosignal vorhanden. Die Tachoeinrichtung 2 ist funktionsfähig und am Mikroprozessor 6 liegt gemäß dem unteren Diagramm in dieser Zeitphase ein "High" - Signal an.

In der Zeitphase zwischen 80 ms und 250 ms ist gemäß dem oberen Diagramm in Fig. 4 ein Tachosignal vorhanden. Am Eingang des Mikroprozessors 6 liegt ein Digitalsignal an, welches eine längere Pausendauer im Vergleich zum Mikroprozessorsignal in Fig. 3 in der Zeitphase zwischen 80 ms und 250 ms aufweist.

In der Zeitphase zwischen 250 ms und 400 ms ist gemäß dem oberen Diagramm in Fig. 4 ein Tachobruch vorhanden. Aufgrund dem Schaltungskonzeptes in Fig. 1 und Fig. 2 wird dann am Eingang des Mikroprozessors 6 eine Änderung des Digitalsignals vom Zustand "High" auf den Zustand "Low" erzeugt. Darin besteht eine wesentliche Unterschiedlichkeit im Vergleich zum Signalverlauf in Fig. 3. Gemäß dem Signalverlauf in Fig. 4 kann somit der Tachobruch stets eindeutig und frühzeitig erkannt werden.

## Patentansprüche

1. Schaltungsanordnung zur Überwachung einer Tachoeinrichtung (2), mit welcher eine Drehzahl eines Motors (5) erfassbar ist, mit einer Steuerelektronik (6, 7), mittels welcher die Drehzahl des Motors (5) durch ein mit dem Motor (5) elektrisch verbundenes erstes elektronisches Schaltelement (7) regelbar ist, wobei die Steuerelektronik (6, 7) mit einer Tacho-Auswerteschaltung (8) verbunden ist, welche ein zweites elektronisches Schaltelement (23) mit einer Steuerelektrode (24) aufweist, welche vorgespannt ist, **dadurch gekennzeichnet, dass** die Steuerelektronik (6, 7) einen Mikroprozessor (6) aufweist, welcher mit dem zweiten elektronischen Schaltelement (23) verbunden ist und abhängig von dem Betriebszustand des zweiten Schaltelements (23) ein dem Betriebszustand zugeordneter Zustand eines Digitalsignals an dem Mikroprozessor (6) angelegt ist, wobei abhängig von dem Zustand des Digitalsignals eine Fehlfunktion der Tachoeinrichtung (2) erkennbar ist.

2. Schaltungsanordnung nach Anspruch 1, **dadurch gekennzeichnet, dass** die Vorspannung der Steuerelektrode (24) so eingestellt ist, dass eine im Vergleich ohne ein Vorspannen der Steuerelektrode (24) geringere elektrische Spannung ausreicht, um das zweite Schaltelement (24) in den leitenden Zustand zu versetzen.

3. Schaltungsanordnung nach Anspruch 1 oder 2, **dadurch gekennzeichnet, dass** die Steuerelektrode (24) mit einem Schaltungsknoten (12) über einen Widerstand (20) elektrisch verbunden ist, mit welchem die Tachoeinrichtung (2) und eine Stromquelle (13), mit welcher die Vorspannung der Steuerelektrode (24) erzeugbar ist, elektrisch verbunden sind.

4. Schaltungsanordnung nach Anspruch 3, **dadurch gekennzeichnet, dass** die Stromquelle (13) einen Widerstand (16) und eine dazu in Reihe geschaltete Diode (17) aufweist.

5. Schaltungsanordnung nach einem der vorhergehenden Ansprüche, **dadurch gekennzeichnet, dass** die Vorspannung zwischen 0,1 V und 0,4 V, insbesondere etwa 0,2 V, beträgt.

6. Schaltungsanordnung nach einem der vorhergehenden Ansprüche, **dadurch gekennzeichnet, dass** die Tachoeinrichtung (2) eine Induktionsspule (3) und ein magnetisches Polrad (4) umfasst.

7. Schaltungsanordnung nach Anspruch 6, **dadurch gekennzeichnet, dass** die Tachoeinrichtung (2) im Betrieb des Motors (5) ein Wechselspannungssignal erzeugt.

8. Schaltungsanordnung nach Anspruch 7, **dadurch gekennzeichnet, dass** der leitende Zustand des zweiten Schaltelements (23) durch die positive Halbwelle des Wechselspannungssignals erzeugbar ist und für die Zeitdauer der positiven Halbwelle ein Low-Zustand des Digitalsignals am Eingang des Mikroprozessors (6) angelegt ist.

9. Schaltungsanordnung nach Anspruch 7 oder 8, **dadurch gekennzeichnet, dass** das zweite Schaltelement (23) während der Zeitdauer der negativen Halbwelle des Wechselspannungssignals gesperrt ist.

10. Schaltungsanordnung nach einem der Ansprüche 7 bis 9, **dadurch gekennzeichnet, dass** die negative Halbwelle der elektrische Spannung auf einen Wert von -0,7 V begrenzt ist.

11. Schaltungsanordnung nach einem der Ansprüche 7 bis 10, **dadurch gekennzeichnet, dass** für die Zeitdauer der negativen Halbwelle ein High-Zustand des Digitalsignals am Eingang des Mikroprozessors (6) angelegt ist.

12. Schaltungsanordnung nach einem der Ansprüche 7 bis 11, **dadurch gekennzeichnet, dass** die Diode (17) der Stromquelle (13) während der Zeitdauer der positiven Halbwelle des Wechselspannungssignals gesperrt ist, wenn an ihr eine Spannung größer 4,2 V, insbesondere größer 4,4 V, anliegt.

13. Schaltungsanordnung nach einem der Ansprüche 7 bis 12, **dadurch gekennzeichnet, dass** die Diode (17) der Stromquelle (13) während der Zeitdauer der negativen Halbwelle des Wechselspannungssignals leitend ist

14. Schaltungsanordnung nach einem der vorhergehenden Ansprüche, **dadurch gekennzeichnet, dass** das zweite elektronische Schaltelement ein Transistor (23) ist.

15. Schaltungsanordnung nach einem der vorhergehenden Ansprüche, **dadurch gekennzeichnet, dass** der Motor (5) zum Antrieb einer Trommel für ein Hausgerät zur Pflege von Wäschestücken ausgebildet ist

16. Hausgerät zur Pflege von Wäschestücken, mit einer Trommel zur Aufnahme von Wäschestücken und einem Motor (5) zum Antrieb der Trommel, welches eine Schaltungsanordnung (1) zur Funktionsüberwachung einer Tachoeinrichtung (2) des Motors (5) nach einem der vorhergehenden Ansprüche umfasst.

## Claims

1. Circuit arrangement for monitoring a tachometer (2), by which a rotational speed of a motor (5) is detectable, with an electronic control system (6, 7), by means of which the rotational speed of the motor (5) can be regulated by a first electronic switching element (7) electrically connected with the motor (5), wherein the electronic control system (6, 7) is connected with a tachometer evaluating circuit (8), which comprises a second electronic switching element (23) with a control electrode (24) which is biased, **characterised in that** the electronic control system (6, 7) comprises a microprocessor (6), which is connected with the second electronic switching element (23) and depending on the operational state of the second switching element (23) a state, which is associated with the operational state, of a digital signal is applied to the microprocessor (6), wherein faulty functioning of the tachometer (2) is recognisable in dependence on the state of the digital signal.

2. Circuit arrangement according to claim 1, **characterised in that** the biasing of the control electrode (24) is set so that an electrical voltage which is smaller by comparison without a biasing of the control electrode (24) is sufficient to displace the second switching element (24) into the conductive state.

3. Circuit arrangement according to claim 1 or 2, **characterised in that** the control electrode (24) is electrically connected with a circuit junction (12) by way a resistance (20), with which the tachometer (2) and a current source (13), by which the bias of the control electrode (24) can be produced, are electrically connected.

4. Circuit arrangement according to claim 3, **characterised in that** the current source (13) comprises a resistance (16) and a diode (17) connected in series therewith.

5. Circuit arrangement according to any one of the preceding claims, **characterised in that** the bias is between 0.1 V and 0.4 V, particularly approximately 0.2 V.

6. Circuit arrangement according to any one of the preceding claims, **characterised in that** the tachometer (2) comprises an induction coil (3) and a magnetic pole wheel (4).

7. Circuit arrangement according to claim 6, **characterised in that** in operation of the motor (5) the tachometer (2) generates an alternating voltage signal.

8. Circuit arrangement according to claim 7, **characterised in that** the conductive state of the second switching element (23) can be generated by the positive half wave of the alternating voltage signal and a low state of the digital signal is applied to the input of the microprocessor (6) for the duration of the positive half wave.

9. Circuit arrangement according to claim 7 or 8, **characterised in that** the second switching element (23) is blocked during the time period of the negative half wave of the alternating voltage signal.

10. Circuit arrangement according to any one of claims 7 to 9, **characterised in that** the negative half wave of the electrical voltage is limited to a value of -0.7 V.

11. Circuit arrangement according to any one of claims 7 to 10, **characterised in that** a high state of the digital signal is applied to the input of the microprocessor (6) for the duration of the negative half wave.

12. Circuit arrangement according to any one of claims 7 to 11, **characterised in that** the diode (17) of the current source (13) is blocked during the time period of the positive half wave of the alternating voltage signal when a voltage greater than 4.2 V, particularly greater than 4.4 V, is applied thereto.

13. Circuit arrangement according to any one of claims 7 to 12, **characterised in that** the diode (17) of the current source (13) is conductive during the time period of the negative half wave of the alternating voltage signal.

14. Circuit arrangement according to any one of the preceding claims, **characterised in that** the second electronic switching element is a transistor (23).

15. Circuit arrangement according to any one of the preceding claims, **characterised in that** the motor (5) is constructed for drive of a drum for a domestic appliance for the treatment of laundry articles.

16. Domestic appliance for treatment of laundry articles, comprising a drum for receiving laundry articles and a motor (5) for driving the drum, which comprises a circuit arrangement (1) for function monitoring of a tachometer (2) of the motor (5) according to any one of the preceding claims.

## Revendications

1. Agencement de circuit destiné à la surveillance d'un dispositif tachymétrique (2) permettant de détecter la vitesse de rotation d'un moteur (5), comprenant un équipement électronique de commande (6, 7) au moyen duquel la vitesse de rotation du moteur (5) peut être réglée par un premier élément de commutation électronique (7) relié au moteur (5), l'équipement électronique de commande (6, 7) étant relié à un circuit (8) d'évaluation du tachymètre, lequel comporte un deuxième élément de commutation électronique (23) avec une électrode de commande (24) laquelle présente une tension de polarisation, **caractérisé en ce que** l'équipement électronique de commande (6, 7) comprend un microprocesseur (6) relié au deuxième élément de commutation électronique (23) et qu'en fonction de l'état de fonctionnement dudit deuxième élément de commutation (23), un état associé audit état de fonctionnement d'un signal numérique est appliqué au microprocesseur (6), étant précisé qu'un dysfonctionnement du dispositif tachymétrique (2) peut être détecté en fonction de l'état du signal numérique.

2. Agencement de circuit selon la revendication 1, **caractérisé en ce que** la tension de polarisation de l'électrode de commande (24) est réglée de telle façon qu'une tension électrique comparativement plus faible sans polarisation de l'électrode de commande (24) suffit pour faire passer le deuxième élément de commutation (23) à l'état conducteur.

3. Agencement de circuit selon la revendication 1 ou 2, **caractérisé en ce que** l'électrode de commande (24) est reliée électriquement, via une résistance (20), à un noeud de circuit (12) auquel sont reliés le dispositif tachymétrique (2) ainsi qu'une source de courant (13) permettant de générer la tension de polarisation de l'électrode de commande (24).

4. Agencement de circuit selon la revendication 3, **caractérisé en ce que** la source de courant (13) comporte une résistance (16) et une diode (17) montée en série avec la résistance.

5. Agencement de circuit selon la revendication 1, **caractérisé en ce que** la tension de polarisation est comprise entre 0,1 V et 0,4 V, en particulier de l'ordre de 0,2 V.

6. Agencement de circuit selon l'une des revendications précédentes, **caractérisé en ce que** le dispositif tachymétrique (2) comprend une bobine d'inductance (3) et une roue polaire magnétique (4).

7. Agencement de circuit selon la revendication 6, **caractérisé en ce que** le dispositif tachymétrique (2) génère un signal de tension alternative lorsque le moteur (5) est en marche.

8. Agencement de circuit selon la revendication 7, **caractérisé en ce que** l'état conducteur du deuxième élément de commutation (23) peut être généré par la demi-onde positive du signal de tension alternative et qu'un état bas du signal numérique est appliqué à l'entrée du microprocesseur (6) pendant la durée de la demi-onde positive.

9. Agencement de circuit selon la revendication 7 ou 8, **caractérisé en ce que** le deuxième élément de commutation (23) est bloqué pendant la durée de la demi-onde négative du signal de tension alternative.

10. Agencement de circuit selon l'une des revendications 7 à 9, **caractérisé en ce que** la demi-onde négative de la tension électrique est limitée à une valeur de -0,7 V.

11. Agencement de circuit selon l'une des revendications 7 à 10, **caractérisé en ce qu'**un état haut du signal numérique est appliqué à l'entrée du microprocesseur (6) pendant la durée de la demi-onde négative.

12. Agencement de circuit selon l'une des revendications 7 à 11, **caractérisé en ce que** la diode (17) de la source de courant (13) est bloquée pendant la durée de la demi-onde positive du signal de tension alternative si la tension qui lui est appliquée est supérieure à 4,2 V, en particulier supérieure à 4,4 V.

13. Agencement de circuit selon l'une des revendications 7 à 12, **caractérisé en ce que** la diode (17) de la source de courant (13) est conductrice pendant la durée de la demi-onde négative du signal de tension alternative.

14. Agencement de circuit selon l'une des revendications précédentes, **caractérisé en ce que** le deuxième élément de commutation électronique est un transistor (23).

15. Agencement de circuit selon l'une des revendications précédentes, **caractérisé en ce que** le moteur (5) est conçu pour entraîner un tambour d'un appareil ménager pour l'entretien de pièces de linge.

16. Appareil ménager pour l'entretien de pièces de linge, avec un tambour destiné à recevoir des pièces de linge et un moteur (5) destiné à entraîner le tambour, comprenant un agencement de circuit (1) pour la surveillance du fonctionnement d'un dispositif tachymétrique (2) du moteur (5) selon l'une des revendications précédentes.
